# EUROPÄISCHE PATENTSCHRIFT

(11) **EP 3 133 370 B1**
(45) Veröffentlichungstag und Bekanntmachung des Hinweises auf die Patenterteilung: **23.12.2020**
(21) Anmeldenummer: 16180550.2
(22) Anmeldetag: 21.07.2016
(51) Int. Cl.: G01B 13/08

(54) **MESSDÜSENANORDNUNG**
MEASURING NOZZLE ARRANGEMENT
SYSTEME DE TUYERE DE MESURE

(30) Priorität: 17.08.2015 DE 102015113575
(43) Veröffentlichungstag der Anmeldung: 22.02.2017
(73) Patentinhaber: JENOPTIK Industrial Metrology Germany GmbH, 78056 Villingen-Schwenningen (DE)
(72) Erfinder: Trolong, Serge, 14400 Saint Martin des Entrees Bayeux Cedex (FR)
(74) Vertreter: Wagner, Carsten

(56) Entgegenhaltungen:
- EP-A2- 2 053 352
- DE-A1-102013 215 281
- JP-A- S6 176 907
- JP-A- H08 145 646
- US-A- 2 972 883
- US-A- 3 535 961

## Beschreibung

Die Erfindung betrifft eine Messdüsenanordnung der im Oberbegriff des Anspruchs 1 genannten Art einer pneumatischen Messvorrichtung zur Vermessung wellenförmiger Werkstücke.

Das Funktionsprinzip pneumatischer Messvorrrichtungen beruht auf dem Vergleich des zu messenden Bauteils mit einem Referenzbauteil. Dabei wird die Druckänderung gemessen, sich die proportional zum Abstand zwischen einer Messdüse der Messvorrichtung und dem zu prüfenden Bauteil einstellt.

Dieses Prinzip ermöglicht eine hohe Auflösung von 0,01 µm und eine hervorragende Linearität während der gesamten Messung. Diese Technologie wird in der dimensionellen Messtechnik bei statischen und dynamischen Messungen für eine Vielzahl von Werkstücken eingesetzt, insbesondere von wellenartigen Werkstücken.

Durch JP 08145 646 A ist eine pneumatische Messvorrichtung zur Vermessung des Außendurchmessers eines wellenförmigen Werkstücks bekannt, die ein flanschartiges Trägerelement mit einer zentrischen Ausnehmung zur Aufnahme des zu vermessenden Werkstücks bekannt. Entlang des Umfanges der Ausnehmung ist eine Messdüsenanordnung mit einer Mehrzahl von pneumatischen Messdüsen angeordnet.

Durch US 2 4 77399 A ist eine als Messlehre ausgebildete pneumatische Messvorrichtung zur Vermessung des Außendurchmessers von wellenförmigen Werkstücken bekannt.

Pneumatische Messvorrrichtungen zur Vermessung wellenförmiger Werkstücke sind ferner durch DE 1 205 711 B und DE 88 02 790 U1 bekannt.

Durch EP 2 053 352 A2, US 3 535 961 A und US 2 972 883 A ist jeweils eine Messdüsenanordnung einer pneumatischen Messvorrichtung zur Vermessung wellenförmiger Werkstücke mit den Merkmalen des Oberbegriffs des Anspruchs 1 bekannt.

Der Erfindung liegt die Aufgabe zugrunde, eine Messdüsenanordnung der im Oberbegriff des Anspruchs 1 genannten Art anzugeben, deren Einsatzmöglichkeiten erweitert sind.

Diese Aufgabe wird durch die im Anspruch 1 angegebene Erfindung gelöst.

Der Erfindung liegt die Erkenntnis zugrunde, dass sich die Messdüsenanordnung vielfältiger einsetzen lässt, wenn sie auf einfache Weise und ohne Beeinträchtigung der Messgenauigkeit für eine Vermessung von Werkstücken mit unterschiedlichem Durchmesser umgerüstet werden kann.

Soll nach der Vermessung eines Werkstücks mit größerem Durchmesser ein Werkstück mit kleinerem Durchmesser vermessen werden, so ist es erforderlich, die Messdüsen soweit aufeinander zu zu verstellen, dass sich die Messdüsen nach dem Einlegen des Werkstücks mit größerem Durchmesser beide Messdüsen in einem geeigneten Arbeitsabstand zu dem Werkstück befinden, in dem eine einwandfreie Messung möglich ist. Die Justierung der Messdüsen zur Einstellung eines geeigneten Arbeitsabstandes ist dabei sehr zeitaufwändig und fehleranfällig.

Um die Umrüstung der Messdüsenanordnung zu vereinfachen, sieht die Erfindung Zentriermittel zur Zentrierung der Trägerelemente relativ zu der Bezugsebene vor, die durch die Längsmittelebene des zu vermessenden Werkstücks definiert ist und beispielsweise und insbesondere durch den Durchmesser des Werkstücks verläuft.

Da erfindungsgemäß die Verstellung der Messdüsen der Messdüsenanordnung stets so erfolgt, dass die Messdüsen nach der Verstellung zu der Bezugsebene zentriert sind, erübrigen sich zeitaufwändige manuelle Justierarbeiten bei der Umrüstung der Messdüsenanordnung auf Werkstücke unterschiedlichen Durchmessers.

Dies spart Zeit und Rüstkosten und erweitert im Ergebnis die Einsatzmöglichkeiten der Messdüsenanordnung und damit der mit der Messdüsenanordnung ausgestatteten pneumatischen Messvorrichtung.

Die Erfindung sieht ferner vor, dass jedes der Trägerelemente eine Prismenhälfte eines Stützprismas zum Abstützen eines zu vermessenden Werkstücks während der Messung trägt. Dadurch ist sichergestellt, dass die Prismenhälften nach der ihrer Verstellung zentriert sind, das Werkstück also in der gewünschten Weise zu der Bezugsebene zentriert unterstützt wird.

Eine weitere Lösung der der Erfindung zugrundeliegenden Aufgabe ist im Anspruch 2 angegeben. Insoweit sieht die Erfindung vor, dass die Trägerelemente mit einem Stützprisma zur Abstützung des zu vermessenden Werkstücks derart in Wirkungsverbindung stehen, dass das Stützprisma bei einer Verstellung der Trägerelemente relativ zu dem Grundkörper höhenverstellbar ist oder in der Höhe verstellt wird. Bei dieser Ausführungsform wird zur Anpassung an Werkstücke unterschiedlichen Durchmessers nicht nur der Abstand der Messdüsen, sondern auch das Stützprisma in der Höhe verstellt.

Wenn eine Anpassung der Messdüsenanordnung an eine relativ geringe Anzahl unterschiedlicher Durchmesser gewünscht oder erforderlich ist, sieht eine vorteilhafte Weiterbildung der Erfindung vor, die Zentriermittel ein lösbar mit dem Grundkörper verbindbares, und in Montageposition symmetrisch zu der Bezugsebene angeordnetes Anlageelement aufweisen, an dem die Trägerelemente in Messposition der Messdüsenanordnung anliegen. Bei dieser Ausführungsform sind die Zentriermittel besonders einfach ausgestaltet.

Eine vorteilhafte Weiterbildung der vorgenannten Ausführungsform sieht vor, dass das Anlageelement einen Anschlag für die Trägerelemente bildet. Durch den Anschlag ist die Position der Trägerelemente jeweils eindeutig definiert.

Um die Anlage der Trägerelemente an dem Anschlag zu verbessern, sieht eine Weiterbildung dieser Ausführungsform Federmittel zum Vorspannen der Trägerelemente gegen den Anschlag vor.

Eine andere vorteilhafte Weiterbildung der Ausführungsform mit dem Anlageelement sieht vor, dass zur Anpassung der Messdüsenanordnung an unterschiedliche Nominaldurchmesser zu vermessender Werkstücke eine Mehrzahl von Anlageelementen vorgesehen ist, deren Ausdehnung parallel zur Messrichtung der Messvorrichtung jeweils an den Nominaldurchmesser des zu vermessenden Werkstücks angepasst ist. Hierbei wird für jeden zu vermessenden Nominaldurchmesser ein angepasstes Anlageelement vorgehalten.

Gemäß einer anderen vorteilhaften Weiterbildung ist das Anlageelement als Stützprisma zum Abstützen des zu vermessenden Werkstücks ausgebildet ist, wobei parallel zur Messrichtung zueinander beabstandete Seitenflächen des Stützprismas Anschlagsflächen für die Trägerelemente bilden. Bei dieser Ausführungsform übernimmt das Anschlagselement gleichzeitig die Funktion eines Stützprismas, so dass beide Bauteile einstückig ausgebildet sind und damit die Anzahl der Bauteile der erfindungsgemäßen Messdüsenanordnung reduziert ist.

Eine außerordentlich vorteilhafte Weiterbildung der Erfindung sieht vor, dass die Zentriermittel eine Verstellvorrichtung zur zu der Bezugsebene symmetrischen Verstellung der Trägerelemente aufweisen, die derart ausgebildet und eingerichtet ist, dass bei Betätigung der Verstellvorrichtung die Trägerelemente gegenläufig synchron zu der Bezugsebene verstellt werden. Bei dieser Ausführungsform ist durch entsprechende Betätigung der Verstellvorrichtung eine stufenlose Anpassung der Messdüsenanordnung an unterschiedliche Durchmesser von zu vermessenden Werkstücken möglich.

Die Verstellvorrichtung kann entsprechend den jeweiligen Anforderungen in beliebiger geeigneter Weise ausgestaltet werden. Um die Verstellvorrichtung besonders einfach und robust auszugestalten, sieht eine vorteilhafte Weiterbildung vor, dass die Verstellvorrichtung eine drehantreibbare Gewindespindel aufweist, wobei ein einerseits der Bezugsebene angeordnetes Ende der Gewindespindel ein Rechtsgewinde und das andererseits der Bezugsebene angeordnete Ende der Gewindespindel ein Linksgewinde aufweist und die Trägerelemente mit einem entsprechenden Innengewinde versehen und jeweils auf ein Ende der Gewindespindel aufgeschraubt sind. Entsprechende Spindeltriebe sind robust und ermöglichen eine Verstellung mit hoher Genauigkeit.

Eine zweckmäßige Weiterbildung der vorgenannten Ausführungsform sieht Mittel zur Fixierung der Gewindespindel in ihrer Axialrichtung relativ zu der Bezugsebene vor.

Um diese Mittel zur Fixierung der Gewindespindel in ihrer Axialrichtung relativ zu der Bezugsebene besonders einfach auszugestalten, sieht eine vorteilhafte Weiterbildung vor, dass die Mittel zur Fixierung der Gewindespindel in ihrer Axialrichtung relativ zu der Bezugsebene einen vorzugsweise zentrisch zu der Bezugsebene an dem Grundkörper angeordneten Fixierbolzen aufweist, der spielfrei in eine an der Gewindespindel gebildete Ringnut eingreift.

Grundsätzlich kann die Verstellvorrichtung manuell betätigt werden. Um die Verstellung zu automatisieren, sieht eine vorteilhafte Weiterbildung vor, dass der Verstellvorrichtung ein durch eine Steuerungseinrichtung ansteuerbarer motorischer, insbesondere elektromotorischer Antrieb zugeordnet ist. Beispielsweise und insbesondere kann als Antrieb ein elektromotorischer Schrittmotor verwendet werden.

Grundsätzlich kann auch eine motorische Verstellung der Trägerelemente manuell gesteuert werden. Um die Verstellung weiter zu automatisieren, sieht eine vorteilhafte Weiterbildung vor, dass die Steuerungseinrichtung einen Speicher zur Abspeicherung unterschiedlicher Positionen der Trägerelemente aufweist und zur automatischen Ansteuerung der abgespeicherten Positionen entsprechend unterschiedlichen Durchmessern zu vermessender Werkstücke ausgebildet und eingerichtet ist.

Um bei den Ausführungsformen mit der Gewindespindel eine Beeinträchtigung der Messgenauigkeit durch Spiel in der Gewindeanordnung zu vermeiden, sieht insoweit eine vorteilhafte Weiterbildung vor, dass den Trägerelementen zwischen diesen und der Gewindespindel wirkende Federmittel zur Minimierung von Spiel in der Gewindeanordnung der Gewindespindel zugeordnet sind.

Um mit einem relativ einfachen Aufbau sowohl eine Verstellung des Abstandes der Messdüsen in Messrichtung als auch eine Höhenverstellung des Stützprismas zu erzielen, sieht eine vorteilhafte Weiterbildung der Erfindung vor, dass die Trägerelemente beiderseits der Bezugsebene Gleitlagerflächen aufweisen, die zusammen eine zu der Bezugsebene symmetrische, V-artig ausgebildete Stützanordnung für das Stützprisma aufweisen, wobei das Stützprisma zu der Stützanordnung wenigstens abschnittsweise komplementär geformte Gleitlagerflächen aufweisen, die derart mit den Gleitlagerflächen der Trägerelemente zusammenwirken, dass das Stützprisma bei einer Verstellung der Trägerelemente relativ zu dem Grundkörper höhenverstellbar ist oder in der Höhe verstellt wird.

In der Messposition werden bei der vorgenannten Ausführungsform in Messposition des Werkstücks die Gleitlagerflächen durch die Gewichtskraft des Werkstücks gegeneinander gedrückt. Um die Anlage der Gleitlagerflächen aneinander zu verbessern, sieht eine vorteilhafte Weiterbildung Federmittel zum Vorspannen der Gleitlagerflächen gegeneinander vor.

Eine erfindungsgemäße Pneumatische Messvorrichtung zur Vermessung wellenförmiger Werkstücke ist im Anspruch 17 angegeben. Die erfindungsgemäße Messvorrichtung ist dadurch gekennzeichnet, dass sie wenigstens eine Messdüsenanordnung nach einem der vorhergehenden Ansprüche aufweist.

Die Erfindung wird nachfolgend unter Bezugnahme auf die beigefügte Zeichnung näher erläutert, in der stark schematisiert Ausführungsbeispiele einer erfindungsgemäßen Messdüsenanordnung dargestellt sind.

Es zeigt:
Fig. 1 stark schematisiert eine Ansicht eines ersten Ausführungsbeispiels einer nicht-erfindungsgemäßen Messdüsenanordnung,
Fig. 2 in gleicher Darstellung wie Fig. 1 ein zweites Ausführungsbeispiel einer nicht-erfindungsgemäßen Messdüsenanordnung und
Fig. 3 in gleicher Darstellung wie Fig. 1 ein Ausführungsbeispiel einer erfindungsgemäßen Messdüsenanordnung.

In den Figuren der Zeichnung sind gleiche bzw. sich entsprechende Bauteile mit den gleichen Bezugszeichen versehen.

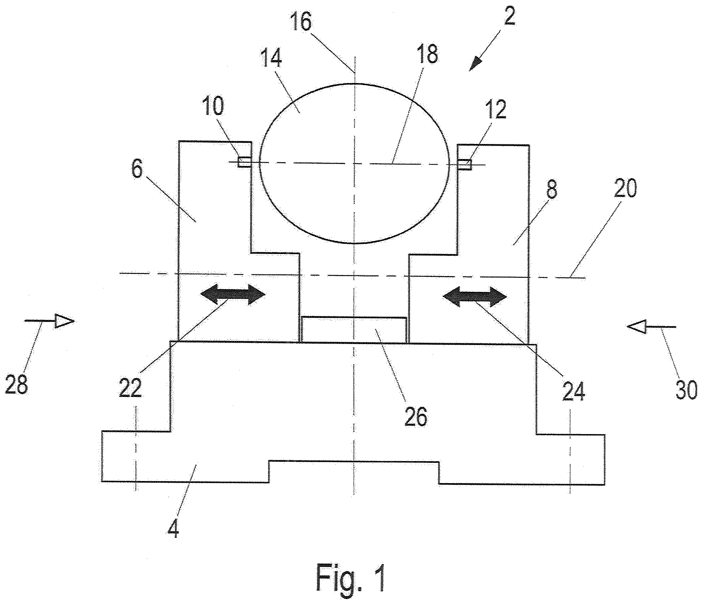

In Fig. 1 ist stark schematisiert ein erstes Ausführungsbeispiel einer nicht-erfindungsgemäßen Messdüsenanordnung 2 einer erfindungsgemäßen pneumatischen Messvorrichtung zur Vermessung wellenförmiger Werkstücke dargestellt. Der grundsätzliche Aufbau und die grundsätzliche Funktionsweise einer pneumatischen Messvorrichtung sind dem Fachmann allgemein bekannt und werden daher hier nicht näher erläutert.

Die Messdüsenanordnung 2 weist einen Grundkörper 4 auf, mit dem Trägerelemente 6, 8 verbunden sind, die Messdüsen 10, 12 tragen, die einander zugewandt sind und bei diesem Ausführungsbeispiel zur Vermessung eines wellenförmigen Werkstücks 14 dienen. Das zu vermessende Werkstück 14 ist in Fig. 1 in seiner Messposition dargestellt, in der es zwischen den Messdüsen 10,12 gehalten ist.

Zum Halten des Werkstücks 14 in der Messposition sind zwei in der in Fig. 1 in die Zeichenebene hinein verlaufenden Axialrichtung des Werkstücks 14 zueinander beabstandete Stützprismen vorgesehen, die aus Darstellungsgründen in Fig. 1 nicht gezeigt sind.

Mit dem Bezugszeichen 16 ist eine Bezugsebene bezeichnet, die durch die Längsmittelebene der Anordnung 2, zu der die Anordnung symmetrisch ausgebildet ist, und den Durchmesser des Werkstücks 14 in der Messposition verläuft. Eine zu der Bezugsebene 16 senkrechte Messachse 18 der Anordnung ist durch eine Verbindungslinie zwischen den Messdüsen 18 definiert.

Die Trägerelemente 6, 8 sind relativ zu der Bezugsebene 16 entlang einer zu der Messachse 18 und damit zu der Bezugsebene senkrechten linearen Achse verstellbar sind. Wie in Fig. 1 durch Doppelpfeile 22, 24 angedeutet, ist der Abstand der Messdüsen zu der Bezugsebene 16 und damit zueinander einstellbar. Durch Einstellung des Abstandes der Messdüsen 10,12 relativ zueinander durch Verstellung der Trägerelemente 6, 8 relativ zueinander ist die Anordnung an unterschiedliche Durchmesser zu vermessender Werkstücke 14 anpassbar.

Erfindungsgemäß sind Zentriermittel zur Zentrierung der Trägerelemente 6, 8 relativ zu der Bezugsebene 14 vorgesehen. Bei dem in Fig. 1 dargestellten Ausführungsbeispiel weisen die die Zentriermittel ein lösbar mit dem Grundkörper 4 verbindbares und in Montageposition symmetrisch zu der Bezugsebene 16 angeordnetes Anlageelement 26 aufweisen, an dem die Trägerelemente 10, 12 in der in Fig. 1 dargestellten Messposition der Messdüsenanordnung 2 anliegen. Bei dem dargestellten Ausführungsbeispiel ist das Anlageelement 26 quaderförmig ausgebildet und ist zu der Bezugsebene 16 zentrisch an dem Grundkörper 4 angeordnet. Beispielsweise kann zentrisch in der Bezugsebene 16 ein Zentrierbolzen an dem Grundkörper 4 angeordnet sein, auf den das Anlageelement aufgesteckt ist.

Bei dem in Fig. 1 dargestellten Ausführungsbeispiel bildet das Anlageelement 26 einen Anschlag für die Trägerelemente 6, 8. Zum Vorspannen der Trägerelemente 6, 8 gegen den Anschlag sind Federmittel vorgesehen, die in Fig. 1 durch Pfeile 28, 30 symbolisiert sind.

Zur Anpassung der Messdüsenanordnung 2 an unterschiedliche Nominaldurchmesser zu vermessender Werkstücke 14 ist eine Mehrzahl von Anlageelementen vorgesehen, deren Ausdehnung parallel zur Messachse 18 der Messdüsenanordnung 2 jeweils an den Nominaldurchmesser des zu vermessenden Werkstücks 14 angepasst ist.

Die Funktionsweise der Messdüsenanordnung 2 ist wie folgt:
Nach Durchführung einer Messung wird zur Anpassung an ein Werkstück 14 mit einem anderen Durchmesser wird das Anlageelement 26 ausgetauscht. Soll ausgehend von der in Fig. 1 dargestellten Konfiguration ein Werkstück mit einem geringeren Durchmesser vermessen werden, so wird das Anlageelement 26 gegen ein anderes Anlageelement ausgetauscht, dessen Ausdehnung entlang der linearen Achse 20 so bemessen ist, dass bei Anlage der Trägerelemente 6, 8 an diesem (kürzeren) Anlageelement unter der Wirkung der Federmittel 28, 30 ein für die Vermessung dieses Werkstücks geeigneter Abstand der Messdüsen 10, 12 zueinander einstellt. Hierbei sind aufgrund der erfindungsgemäßen Ausgestaltung die Trägerelemente 6, 8 und damit die Messdüsen 10, 12 zu der Bezugsebene 16 zentriert.

Zur Höhenanpassung des Werkstücks derart, dass das Werkstück mit seinem zu messenden Durchmesser in Vertikalrichtung auf Höhe der Messachse 18 liegt, können entweder die Stützprismen entweder ebenfalls ausgetauscht oder aber in ihrer Höhe verstellt werden. Daran anschließend kann die Messung durchgeführt werden.

Eine Umrüstung der Messdüsenanordnung 2 für eine Vermessung von Werkstücken unterschiedlichen Durchmesser kann damit auf schnelle und einfache Weise ohne aufwändige Justierarbeiten und unter Beibehaltung der Messgenauigkeit ausgeführt werden.

Das Anlageelement 26 ist vorteilhafterweise einstückig ausgebildet, wie in Fig. 1 dargestellt. Es kann jedoch unter Beibehaltung des Grundprinzips auch mehrteilig ausgebildet sein. Insbesondere ist es möglich, zur Vergrößerung des Abstandes der Messdüsen relativ zueinander mehrere Anlageelemente entlang der linearen Achse hintereinander anzuordnen.

Zur Vermessung des Werkstücks 14 an mehreren in seiner Axialrichtung beabstandeten Messstellen, beispielsweise bei gleichzeitiger Vermessung mehrerer Lager eine Kurbelwelle, kann eine erfindungsgemäße Messvorrichtung eine Mehrzahl von in Axialrichtung beabstandeten Messdüsenanordnungen 2 aufweisen.

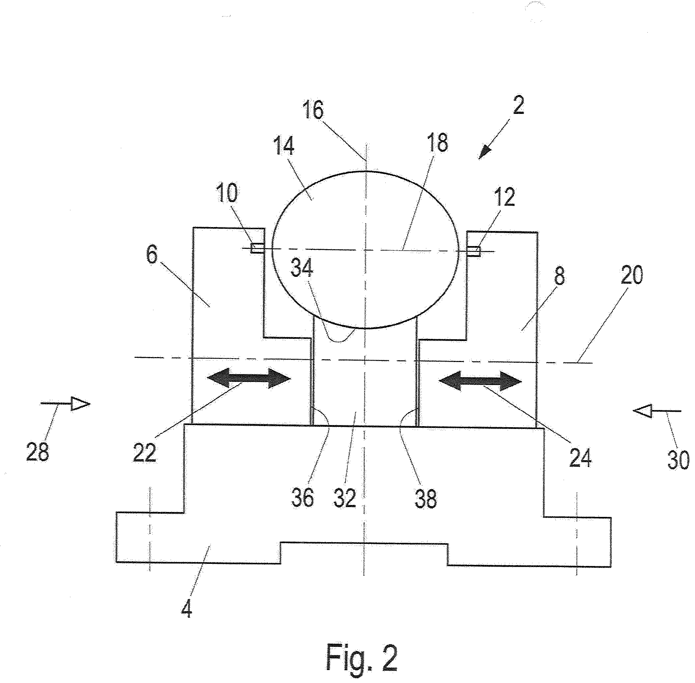

In Fig. 2 ist ein zweites Ausführungsbeispiel einer nicht-erfindungsgemäßen Messdüsenanordnung 2 dargestellt, das sich von dem Ausführungsbeispiel gemäß Fig. 1 dadurch unterscheidet, dass das Anlageelement als Stützprisma 32 zum Abstützen des zu vermessenden Werkstücks 14 ausgebildet ist. Das Stützprisma 32 weist an seiner den Messdüsen 10, 12 und damit dem Werkstück zugwandten Seite eine im Querschnitt V-förmige Stützfläche 34 auf. Entlang der linearen Achse 20 zueinander beabstandete Seitenflächen 36, 38 des Stützprismas 32 bilden Anschlagsflächen für die Trägerelemente.

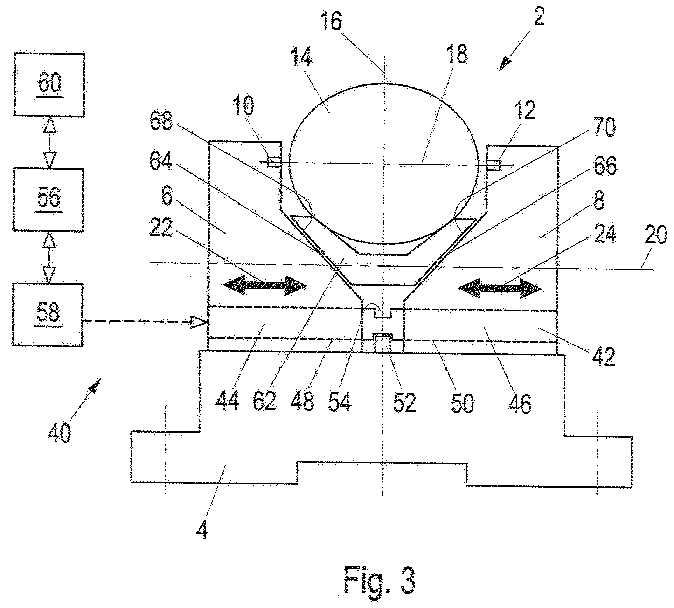

Bei dem ersten Ausführungsbeispiel gemäß Fig. 1 und dem zweiten Ausführungsbeispiel gemäß Fig. 2 ist der Abstand zwischen den Messdüsen entsprechend der Länge des jeweiligen Anlageelementes in Stufen verstellbar. Anhand der Fig. 3 wird nachfolgend ein erfindungsgemäßes Ausführungsbeispiel beschrieben, das sich von dem ersten und dem zweiten Ausführungsbeispiel dadurch unterscheidet, dass der Abstand zwischen den Messdüsen unter Beibehaltung der erfindungsgemäßen Zentrierung stufenlos einstellbar ist.

Bei dem in Fig. 3 dargestellten Ausführungsbeispiel weisen die Zentriermittel eine Verstellvorrichtung 40 zur zu der Bezugsebene 16 symmetrischen Verstellung der Trägerelemente 6, 8 auf, die derart ausgebildet und eingerichtet ist, dass bei Betätigung der Verstellvorrichtung 40 die Trägerelemente gegenläufig synchron zu der Bezugsebene 16verstellt werden. Bei dem dargestellten Ausführungsbeispiel weist die Verstellvorrichtung eine ortsfeste, drehantreibbare Gewindespindel 42 auf, wobei ein einerseits der Bezugsebene angeordnetes Ende 44 der Gewindespindel 42 ein Rechtsgewinde und das andererseits der Bezugsebene angeordnete Ende 46 der Gewindespindel ein Linksgewinde aufweist und die Trägerelemente 6, 8 mit einem entsprechenden Innengewinde 48 bzw. 50 versehen und jeweils auf ein Ende der Gewindespindel 42 aufgeschraubt sind. Entsprechend der Drehrichtung der Gewindespindel bewegen sich damit die Trägerelemente 6, 8 entweder aufeinander zu oder voneinander weg.

Um die Gewindespindel gegen axiale Verschiebunngen zu sichern und damit in ihrer Axialrichtung ortsfest zu halten, sind Mittel zur Fixierung der Gewindespindel 42 in ihrer Axialrichtung relativ zu der Bezugsebene 16 vorgesehen. Diese Mittel bei diesem Ausführungsbeispiel einen zentrisch zu der Bezugsebene 16 an dem Grundkörper 4 angeordneten Fixierbolzen 52 aufweist, der spielfrei in eine an der Gewindespindel 42 gebildete Ringnut 54 eingreift.

Der Verstellvorrichtung 40 ist ein durch eine Steuerungseinrichtung 56 ansteuerbarer motorischer Antrieb 58 zugeordnet ist, der bei diesem Ausführungsbeispiel als elektromotorischer Antrieb ausgebildet ist.

Die Steuerungseinrichtung weist einen Speicher 60 zur Abspeicherung unterschiedlicher Positionen der Trägerelemente 6, 10 und damit der Messdüsen 10, 12 auf und ist zur automatischen Ansteuerung der abgespeicherten Positionen entsprechend unterschiedlichen Durchmessern zu vermessender Werkstücke ausgebildet und eingerichtet ist.

Den Trägerelementen 6, 8 sind zwischen diesen und der Gewindespindel 42 wirkende Federmittel zur Minimierung von Spiel in dem Gewinde der Gewindespindel zugeordnet sind. Aus Darstellungsgründen sind die Federmittel in der Zeichnung nicht gezeigt.

Bei diesem Ausführungsbeispiel sind die Trägerelemente 6, 10 mit einem symmetrisch zu der Bezugsebene 16 angeordneten Stützprisma 62 zur Abstützung des zu vermessenden Werkstücks derart in Wirkungsverbindung stehen, dass das Stützprisma 62 bei einer Verstellung der Trägerelemente relativ zu dem Grundkörper 4 höhenverstellbar ist bzw. in der Höhe verstellt wird. Hierzu weisen die Trägerelemente 6, 8 bei dem dargestellten Ausführungsbeispiel beiderseits der Bezugsebene Gleitlagerflächen 64, 66 auf, die zusammen eine zu der Bezugsebene 16 symmetrische, im Querschnitt V-artige Stützanordnung für das Stützprisma 62 bilden, wobei das Stützprisma 62 zu den Gleitlagerfächen 64, 66 der Stützanordnung wenigstens abschnittsweise komplementär geformte Gleitlagerflächen 68, 70 aufweisen, die derart mit den Gleitlagerflächen 64, 66 der Trägerelemente zusammenwirken, dass das Stützprisma 62 bei einer Verstellung der Trägerelemente 6, 8 zueinander relativ zu dem Grundkörper 4 höhenverstellbar ist bzw. in der Höhe verstellt wird.

Zum Vorspannen der Gleitlagerflächen 64, 66 gegen die Gleitlagerflächen 68, 70 sind Federmittel vorgesehen, die aus Darstellungsgründen in der Zeichnung nicht gezeigt sind.

Die Funktionsweise dieses Ausführungsbeispiels ist wie folgt:
Um die Messdüsenanordnung 2 ausgehend von der in Fig. 3 dargestellten Konfiguration für eine Vermessung eines Werkstücks mit geringerem Durchmesser umzurüsten, wird die Gewindespindel 42 mittels des Antriebs 58 so drehangetrieben, dass sich die Trägerelemente 6, 8 und damit die Messdüsen 10, 12 aufeinander zu bewegen. Hierbei bewegen sich die Gleitlagerflächen 64, 66 der Trägerelemente 6, 8 aufeinander zu, wobei das Stützprisma 62 mit seinen Gleitlagerflächen 68, 70 auf den Gleitlagerflächen 64, 66 der Trägerelemente 6, 8 gleitet und hierbei angehoben wird. Auf diese Weise ist zusammen mit der Verstellung des Abstandes der Messdüsen 10, 12 zueinander gleichzeitig eine Höhenverstellung des Stützprismas realisiert.

Das durch die Gleitlagerflächen 64, 66 der Trägerelemente mit den Gleitlagerflächen 68, 70 des Stützprismas gebildete Getrieb ist so ausgebildet und eingerichtet, dass bei jedem eingestellten Abstand der Trägerelemente 6,8 und damit der Messdüsen 10, 12 relativ zueinander das Stützprisma 62 ins seiner Höhe so eingestellt ist, dass sich der zu vermessende Durchmesser des Werkstücks auf Höhe der Messachse 18 befindet.

Ist entsprechend dem Durchmesser des zu vermessenden Werkstücks der erforderliche Abstand der Messdüsen 10, 12 zueinander und gleichzeitig damit die erforderliche Höhe des Stützprismas 62 erreicht, wird der Antrieb 68 gestoppt. Das Werkstück kann dann eingelegt und die Messung gestartet werden.

Unterschiedliche Abstände der Messdüsen 10, 12 zueinander und damit unterschiedliche Höhen des Stützprismas 62 können mit Hilfe von Referenzbauteilen unterschiedlichen Durchmessers eingestellt, und die sich daraus ergebenden Positionen der Trägerelemente 6, 8 relativ zueinander und zu der Bezugsebene 16 können abgespeichert (Speicher 60) werden. Zur Einstellung der Messdüsenanordnung 2 auf unterschiedliche Durchmesser können diese Positionen dann im Messbetrieb mithilfe der Steuerungseinrichtung angefahren werden.

Damit ist auf einfache und schnelle Weise eine stufenlose Einstellung der Messdüsenanordnung 2 für eine Vermessung von Bauteilen unterschiedlichen Durchmessers ermöglicht.

Eine Abwandlung der Ausführungsform gemäß Fig. 3 besteht darin, dass das Stützprisma 62 mittels einer Linearführung entlang einer in der Bezugsebene liegenden linearen Achse, bei dem dargestellten Ausführungsbeispiel also vertikal verstellbar ist, wobei die Verstellvorrichtung für eine Verstellung des Stützprismas 62 ausgebildet und eingerichtet ist. Dabei können die Trägerelemente 6, 8 entsprechend den Ausführungsbeispielen gemäß Fig. 1 und Fig. 2 in Richtung senkrecht zu der Bezugsebene linear geführt und durch Federmittel gegen das Stützprisma 62 vorgespannt sein, so dass die Gleitlagerflächen 64 und 68 bzw. 66 und 70 Anschlagsflächen bilden. Die Verstellung vollzieht sich dann derart, dass die erforderliche Höhe des Stützprismas 62 mittels der Verstellvorrichtung eingestellt wird. Da die Trägerelemente 6, 8 durch die Federmittel in Anlage an dem Stützprisma gehalten sind, stellt sich dabei automatisch der erforderliche Abstand der Trägerelemente 6, 8 und damit der Messdüsen 10, 12 relativ zueinander ein. Das Stützprisma 62 übernimmt damit bei dieser Abwandlung die Funktion des Anlageelements 26 gemäß Fig. 1 und Fig. 2 und fungiert als Anschlag.

Der Öffnungswinkel des Stützprismas 62 zum Werkstück 14 hin wird jeweils entsprechend den messtechnischen Erfordernissen gewählt, während der Öffnungswinkel der durch die Gleitlagerflächen 64, 66 gebildeten V-artigen Stützanordnung so gewählt wird, dass das Stützprisma 62 möglichst reibungsarm auf den Gleitlagerflächen 64, 66 gleitet.

Es ist auch möglich, dass die bei dem Ausführungsbeispiel gemäß Fig. 3 als Gleitlagerflächen 64, 66 fungierenden Flächen miteinander das Stützprisma bilden. Bei dieser nicht-erfindungsgemäßen Abwandlung tragen also die Trägerelemente 6, 8 nicht die Messdüsen 10, 12, sondern jeweils eine Prismenhälfte des Stützprismas. Die Prismenhälften können jeweils einstückig mit dem zugeordneten Trägerelement ausgebildet sein. Eine Messvorrichtung kann dann zwei entsprechende Vorrichtungen (zur Abstützung und statisch bestimmten Lagerung des Werkstücks) sowie wenigstens eine Anordnung beispielsweise gemäß Fig. 1 oder Fig. 2 (zur Durchführung der Messung) aufweisen.

Den Messdüsen 10, 12 können eine gemeinsame Druckluftversorgung und ein gemeinsamer Messwandler zugeordnet sein, so dass die Addition der Abstände der Messdüsen 10, 12 zu dem Werkstück 14 gemessen wird. Es ist jedoch auch möglich, jeder Messdüse 10 bzw. 12 eine eigene Druckluftversorgung und einen eigenen Messwandler zuzuordnen, so dass dann der Abstand der jeweiligen Messdüse 10 bzw. 12 zu dem Werkstück 14 für beide Messdüsen 10, 12 getrennt voneinander gemessen wird.

## Patentansprüche

1. Messdüsenanordnung (2) einer pneumatischen Messvorrichtung zur Vermessung wellenförmiger Werkstücke (14),
mit einem Grundkörper (4),
mit zwei einander zugewandten Messdüsen (10, 12) und
mit zwei mit dem Grundkörper (4) verbindbaren oder verbundenen Trägerelementen,
wobei die Trägerelemente (6, 8) relativ zu einer Bezugsebene (16) verstellbar sind und jedes der Trägerelemente (6, 8) eine der Messdüsen (10, 12) trägt,
**dadurch gekennzeichnet,**
**dass** die Messdüsenanordnung Zentriermittel zur Zentrierung der Trägerelemente (6, 8) relativ zu der Bezugsebene (16) aufweist,
**dass** zur Abstützung des zu vermessenden Werkstücks (14) während der Messung ein aus zwei Prismenhälften bestehendes Stützprisma vorhanden ist und
**dass** jedes der Trägerelemente (6, 8) eine Prismenhälfte des Stützprismas trägt.

2. Messdüsenanordnung (2) einer pneumatischen Messvorrichtung zur Vermessung wellenförmiger Werkstücke (14),
mit einem Grundkörper (4),
mit zwei einander zugewandten Messdüsen (10, 12) und
mit zwei mit dem Grundkörper (4) verbindbaren oder verbundenen Trägerelementen,
wobei die Trägerelemente (6, 8) relativ zu einer Bezugsebene (16) verstellbar sind und jedes der Trägerelemente (6, 8) eine der Messdüsen (10, 12) trägt,
**dadurch gekennzeichnet,**
**dass** die Messdüsenanordnung Zentriermittel zur Zentrierung der Trägerelemente (6, 8) relativ zu der Bezugsebene (16) aufweist,
**dass** die Zentriermittel eine Verstellvorrichtung (40) zur zu der Bezugsebene (16) symmetrischen Verstellung der Trägerelemente (6, 8) aufweisen, die derart ausgebildet und eingerichtet ist, dass bei Betätigung der Verstellvorrichtung (40) die Trägerelemente (6, 8) gegenläufig synchron zu der Bezugsebene (16) verstellt werden und
**dass** die Trägerelemente (6, 8) mit einem Stützprisma (62) zur Abstützung des zu vermessenden Werkstücks (14) derart in Wirkungsverbindung stehen, dass das Stützprisma (62) bei einer Verstellung der Trägerelemente (6, 8) relativ zu dem Grundkörper (4) höhenverstellbar ist oder in der Höhe verstellt wird.

3. Messdüsenanordnung nach Anspruch 1, **dadurch gekennzeichnet, dass** die Zentriermittel ein lösbar mit dem Grundkörper (4) verbindbares und in Montageposition symmetrisch zu der Bezugsebene (16) angeordnetes Anlageelement (26) aufweisen, an dem die Trägerelemente (6, 8) in Messposition der Messdüsenanordnung (2) anliegen.

4. Messdüsenanordnung nach Anspruch 3, **dadurch gekennzeichnet, dass** das Anlageelement (26) einen Anschlag für die Trägerelemente (6, 8) bildet.

5. Messdüsenanordnung nach Anspruch 4, **gekennzeichnet durch** Federmittel zum Vorspannen der Trägerelemente (6, 8) gegen den Anschlag.

6. Messdüsenanordnung nach einem der Ansprüche 3 bis 5, **dadurch gekennzeichnet, dass** zur Anpassung der Messdüsenanordnung (2) an unterschiedliche Nominaldurchmesser zu vermessender Werkstücke (14) eine Mehrzahl von Anlageelementen vorgesehen ist, deren Ausdehnung parallel zu einer Messachse (18) der Messdüsenanordnung (2) jeweils an den Nominaldurchmesser des zu vermessenden Werkstücks (14) angepasst ist.

7. Messdüsenanordnung nach einem der Ansprüche 3 bis 6, **dadurch gekennzeichnet, dass** das Anlageelement (26) als Stützprisma (32) zum Abstützen des zu vermessenden Werkstücks (14) ausgebildet ist, wobei parallel zur Messachse (18) zueinander beabstandete Seitenflächen des Stützprismas (32) Anschlagsflächen für die Trägerelemente (6, 8) bilden.

8. Messdüsenanordnung nach Anspruch 1 oder 4, **dadurch gekennzeichnet, dass** die Zentriermittel eine Verstellvorrichtung (40) zur zu der Bezugsebene (16) symmetrischen Verstellung der Trägerelemente (6, 8) aufweisen, die derart ausgebildet und eingerichtet ist, dass bei Betätigung der Verstellvorrichtung (40) die Trägerelemente (6, 8) gegenläufig synchron zu der Bezugsebene (16) verstellt werden.

9. Messdüsenanordnung nach Anspruch 2 oder 8, **dadurch gekennzeichnet, dass** die Verstellvorrichtung (40) eine drehantreibbare Gewindespindel (42) aufweist, wobei ein einerseits der Bezugsebene (16) angeordnetes Ende (44) der Gewindespindel (42) ein Rechtsgewinde und das andererseits der Bezugsebene angeordnete Ende (46) der Gewindespindel (42) ein Linksgewinde aufweist und die Trägerelemente (6, 8) mit einem entsprechenden Innengewinde versehen und jeweils auf ein Ende (44 bzw. 46) der Gewindespindel aufgeschraubt sind.

10. Messdüsenanordnung nach Anspruch 9, **gekennzeichnet durch** Mittel zur Fixierung der Gewindespindel (42) in ihrer Axialrichtung relativ zu der Bezugsebene (16).

11. Messdüsenanordnung nach Anspruch 10, **dadurch gekennzeichnet, dass** die Mittel zur Fixierung der Gewindespindel (42) in ihrer Axialrichtung relativ zu der Bezugsebene (16) einen vorzugsweise zentrisch zu der Bezugsebene (16) an dem Grundkörper (4) angeordneten Fixierbolzen (52) aufweisen, der spielfrei in eine an der Gewindespindel gebildete Ringnut (54) eingreift.

12. Messdüsenanordnung nach einem der Ansprüche 8 bis 11, **dadurch gekennzeichnet, dass** der Verstellvorrichtung (40) ein durch eine Steuerungseinrichtung (56) ansteuerbarer motorischer, insbesondere elektromotorischer Antrieb (58) zugeordnet ist.

13. Messdüsenanordnung nach Anspruch 12, **dadurch gekennzeichnet, dass** die Steuerungseinrichtung (56) einen Speicher (60) zur Abspeicherung unterschiedlicher Positionen der Trägerelemente (6, 8) aufweist und zur automatischen Ansteuerung der abgespeicherten Positionen entsprechend unterschiedlichen Durchmessern zu vermessender Werkstücke (14) ausgebildet und eingerichtet ist.

14. Messdüsenanordnung nach einem der Ansprüche 8 bis 13, **dadurch gekennzeichnet, dass** den Trägerelementen (6, 8) zwischen diesen und der Gewindespindel (42) wirkende Federmittel zur Minimierung von Spiel in dem Gewinde der Gewindespindel (42) zugeordnet sind.

15. Messdüsenanordnung nach Anspruch 2, **dadurch gekennzeichnet, dass** die Trägerelemente (6, 8) beiderseits der Bezugsebene (16) Gleitlagerflächen (64, 66) aufweisen, die zusammen eine zu der Bezugsebene symmetrische, V-artig ausgebildete Lageranordnung für das Stützprisma (62) aufweisen, wobei das Stützprisma (62) zu der Lageranordnung wenigstens abschnittsweise komplementär geformte Gleitlagerflächen (68, 70) aufweisen, die derart mit den Gleitlagerflächen (64, 66) der Trägerelemente (6, 8) zusammenwirken, dass das Stützprisma (62) bei einer Verstellung der Trägerelemente (6, 8) relativ zu dem Grundkörper (4) höhenverstellbar ist oder in der Höhe verstellt wird.

16. Messdüsenanordnung nach Anspruch 15, **gekennzeichnet durch** Federmittel zum Vorspannen der Gleitlagerflächen (64, 68 und 66, 70) gegeneinander.

17. Pneumatische Messvorrichtung zur Vermessung wellenförmiger Werkstücke, **dadurch gekennzeichnet, dass** sie wenigstens eine Messdüsenanordnung (2) nach einem der vorhergehenden Ansprüche aufweist.

## Claims

1. Measuring nozzle arrangement (2) of a pneumatic measuring device for measuring wave-like workpieces (14),
comprising a main body (4),
two measuring nozzles (10, 12) facing one another and
two support elements which are connectable or connected to the main body (4),
wherein the support elements (6, 8) can be adjusted relative to a reference plane (16), and each of the support elements (6, 8) supports one of the measuring nozzles (10, 12),
**characterised in that**
the measuring nozzle arrangement has centring means for centring the support elements (6, 8) relative to the reference plane (16),
for supporting the workpiece (14) to be measured during the measurement a support prism consisting of two prism halves is provided and
each of the support elements (6, 8) supports a prism half of the support prism.

2. Measuring nozzle arrangement (2) of a pneumatic measuring device for measuring wave-like workpieces (14),
comprising a main body (4),
two measuring nozzles (10, 12) facing one another and
two support elements which are connectable or connected to the main body (4),
wherein the support elements (6, 8) are adjustable relative to a reference plane (16), and each of the support elements (6, 8) supports one of the measuring nozzles (10, 12),
**characterised in that**
the measuring nozzle arrangement has centring means for centring the support elements (6, 8) relative to the reference plane (16),
the centring means have an adjusting device (40) for symmetrically adjusting the support elements (6, 8) relative to the reference plane (16), which is designed and configured such that when the adjusting device (40) is activated the support elements (6, 8) are adjusted in opposite directions synchronously to the reference plane (16) and
**in that** the support elements (6, 8) are in operative connection with a support prism (62) for supporting the workpiece (14) to be measured in such a way that the support prism (62) is adjustable in height or is adjusted in height on an adjustment of the support elements (6, 8) relative to the main body (4).

3. Measuring nozzle arrangement according to claim 1, **characterised in that** the centring means have a bearing element (26) which can be connected releasably to the main body (4) and arranged in assembly position symmetrical to the reference plane (16), on which bearing element the support elements (6, 8) bear in the measurement position of the measuring nozzle arrangement (2).

4. Measuring nozzle arrangement according to claim 3, **characterised in that** the bearing element (26) forms a stop for the support elements (6, 8).

5. Measuring nozzle arrangement according to claim 4, **characterised by** spring means for pretensioning the support elements (6, 8) against the stop.

6. Measuring nozzle arrangement according to any of claims 3 to 5, **characterised in that** for adjusting the measuring nozzle arrangement (2) to different nominal diameters of workpieces (14) to be measured a plurality of bearing elements is provided, the extension of which parallel to a measurement axis (18) of the measuring nozzle arrangement (2) is adjusted respectively to the nominal diameter of the workpiece (14) to be measured.

7. Measuring nozzle arrangement according to any of claims 3 to 6, **characterised in that** the bearing element (26) is designed as a support prism (32) for supporting the workpiece (14) to be measured, wherein parallel to the measurement axis (18) spaced apart side surfaces of the support prism (32) form stop surfaces for the support elements (6, 8).

8. Measuring nozzle arrangement according to claim 1 or 4, **characterised in that** the centring means have an adjusting device (40) for adjusting the support elements (6, 8) symmetrically to the reference plane (16), which is designed and configured such that on activating the adjusting device (40) the support elements (6, 8) are adjusted in opposite directions synchronously to the reference plane (16).

9. Measuring nozzle arrangement according to claim 2 or 8, **characterised in that** the adjusting device (40) has a rotary-driven threaded spindle (42), wherein one end (44) of the threaded spindle (42) arranged on one side of the reference plane (16) has a righthand thread and the end (46) of the threaded spindle (42) arranged on the other side of the reference plane has a left-hand thread, and the support elements (6, 8) are provided with a corresponding inner thread and are screwed respectively onto one end (44 or 46) of the threaded spindle.

10. Measuring nozzle arrangement according to claim 9, **characterised by** means for fixing the threaded spindle (42) in its axial direction relative to the reference plane (16).

11. Measuring nozzle arrangement according to claim 10, **characterised in that** the means for fixing the threaded spindle (42) in its axial direction relative to the reference plane (16) have a fixing bolt (52) arranged preferably centrally to the reference plane (16) on the main body (4), which fixing bolt engages without play in an annular groove (54) formed on the threaded spindle.

12. Measuring nozzle arrangement according to any of claims 8 to 11, **characterised in that** the adjusting device (40) is assigned a motor drive, in particular an electromotive drive (58) controlled by a control device (56).

13. Measuring nozzle arrangement according to claim 12, **characterised in that** the control device (56) has a memory (60) for storing different positions of the support elements (6, 8) and is designed and configured for the automatic control of the saved positions according to different diameters of workpieces (14) to be measured.

14. Measuring nozzle arrangement according to any of claims 8 to 13, **characterised in that** support elements (6, 8) are assigned spring means acting between the latter and the threaded spindle (42) for minimising play in the thread of the threaded spindle (42).

15. Measuring nozzle arrangement according to claim 2, **characterised in that** the support elements (6, 8) on both sides of the reference plane (16) have plain bearing surfaces (64 or 66), which together have a V-like bearing arrangement for the support prism (62) symmetrical to the reference plane, wherein the support prisms (62) have plain bearing surfaces (68, 70) shaped to be at least in part complementary to the bearing arrangement, which cooperate with the plain bearing surfaces (64, 66) of the support elements (6, 8) such that the support prism (62) is height-adjustable or is adjusted in height with an adjustment of the support elements (6, 8) relative to the main body (4).

16. Measuring nozzle arrangement according to claim 15, **characterised by** spring means for pretensioning the plain bearing surfaces (64, 68 and 66, 70) against one another.

17. Pneumatic measuring device for measuring wave-like workpieces, **characterised in that** it has at least one measuring nozzle arrangement (2) according to any of the preceding claims.

## Revendications

1. Disposition de buses de mesure (2) d'un dispositif de mesure pneumatique pour la mesure de pièces de type arbres (14),
avec un corps de base (4),
avec deux buses de mesure (10, 12) orientées l'une vers l'autre et
avec deux éléments de support reliés ou pouvant être reliés avec le corps de base (4),
dans lequel les éléments de support (6, 8) peuvent être réglés par rapport à un plan de référence (16) et chacun des éléments de support (6, 8) supporte une des buses de mesure (10, 12),
caractériséee en ce que
la disposition de buses de mesure comprend des moyens de centrage pour le centrage des éléments de support (6, 8) par rapport au plan de référence (16),
pour le soutien de la pièce à mesurer (14) pendant la mesure, est prévu un prisme de soutien constitué de deux moitiés de prisme et
chacun des éléments de support (6, 8) supporte une moitié de prisme du prisme de soutien.

2. Disposition de buses de mesure (2) d'un dispositif de mesure pneumatique pour la mesure de pièces de type arbres (14),
avec un corps de base (4),
avec deux buses de mesure (10, 12) orientées l'une vers l'autre et
avec deux éléments de support reliés ou pouvant être reliés avec le corps de base (4),
dans lequel les éléments de support (6, 8) peuvent être réglés par rapport à un plan de référence (16) et chacun des éléments de support (6, 8) supporte une des buses de mesure (10, 12),
caractériséee en ce que
la disposition de buses de mesure comprend des moyens de centrage pour le centrage des éléments de support (6, 8) par rapport au plan de référence (16),
les moyens de centrage comprennent un dispositif de réglage (40) pour le réglage symétrique par rapport au plan de référence (16) des éléments de support (6, 8), qui est conçu pour de façon à ce que, lors de l'actionnement dispositif de réglage (40), les éléments de support (6, 8) soient réglés de manière synchrone inversement par rapport au plan de référence (16) et
les éléments de support (6, 8) sont en liaison fonctionnelle avec un prisme de soutien (62) pour le soutien de la pièce à mesurer (14), de façon à ce que le prisme de soutien (62) soit réglable en hauteur ou soit réglé en hauteur par rapport au corps de base (4) lors d'un réglage des éléments de support (6, 8).

3. Disposition de buses de mesure selon la revendication 1, **caractérisée en ce que** les moyens de centrage comprennent un élément d'appui (26) pouvant être relié de manière amovible avec le corps de base (4) et disposé, dans la position de montage, de manière symétrique par rapport au plan de référence (16), sur lequel les éléments de support (6, 8) s'appuient dans la position de mesure du dispositif à buses de mesure (2).

4. Disposition de buses de mesure selon la revendication 3, **caractérisée en ce que** l'élément d'appui (26) forme une butée pour les éléments de support (6, 8).

5. Disposition de buses de mesure selon la revendication 4, **caractérisée par** des moyens à ressort pour la précontrainte des éléments de support (6, 8) contre la butée.

6. Disposition de buses de mesure selon l'une des revendications 3 à 5, **caractérisée en ce que**, pour l'adaptation de la disposition de buses de mesure (2) à différents diamètres nominaux de pièces (14) à mesurer, sont prévus une pluralité d'éléments d'appui dont l'extension parallèle à un axe de mesure (18) de la disposition de buses de mesure (2) est adaptée au diamètre nominal de la pièce à mesurer (14).

7. Disposition de buses de mesure selon l'une des revendications 3 à 6, **caractérisée en ce que** l'élément d'appui (26) est conçu comme un prisme de soutien (32) pour le soutien de la pièce à mesurer (14), dans lequel, parallèlement à l'axe de mesure (18), des surfaces latérales distantes entre elles du prisme de soutien (32) forment des surfaces de butée pour les éléments de support (6, 8).

8. Disposition de buses de mesure selon la revendication 1 ou 4, **caractérisée en ce que** les moyens de centrage comprennent un dispositif de réglage (40) pour le réglage symétrique par rapport au plan de référence (16) des éléments de support (6, 8), qui est conçu de façon à ce que, lors de l'actionnement du dispositif de réglage (40), les éléments de support (6, 8) soient réglés de manière synchrone inversement par rapport au plan de référence (16).

9. Disposition de buses de mesure selon la revendication 2 ou 8, **caractérisée en ce que** le dispositif de réglage (40) comprend une broche filetée (42) pouvant être entraînée en rotation, dans lequel une extrémité (44), disposée d'un côté du plan de référence (16), de la broche filetée (42) comprend un filetage à droite et l'extrémité (46), disposée de l'autre côté du plan de référence, de la broche filetée (42), comprend un filetage à gauche et les éléments de support (6, 8) sont munis d'un filetage interne correspondant et sont vissés chacun sur une extrémité (44 resp. 46) de la broche filetée.

10. Disposition de buses de mesure selon la revendication 9, **caractérisée par** des moyens pour la fixation de la broche filetée (42) dans sa direction axiale par rapport au plan de référence (16).

11. Disposition de buses de mesure selon la revendication 10, **caractérisée en ce que** les moyens de fixation de la broche filetée (42) dans sa direction axiale par rapport au plan de référence (16) comprennent un boulon de fixation (52), disposé de préférence de manière centrale par rapport au plan de référence (16), sur le corps de base (4), qui s'emboîte sans jeu dans une rainure annulaire (54) formée sur la broche filetée.

12. Disposition de buses de mesure selon l'une des revendications 8 à 11, **caractérisée en ce que**, au dispositif de réglage (40), correspond un entraînement à moteur électrique (58) contrôlable par un dispositif de commande (56).

13. Disposition de buses de mesure selon la revendication 12, **caractérisée en ce que** le dispositif de commande (56) comprend une mémoire (60) pour l'enregistrement de différentes positions des éléments de support (6, 8) et qui est conçue pour le contrôle automatique des positions enregistrées en fonction de différents diamètres de pièces à mesurer (14).

14. Disposition de buses de mesure selon l'une des revendications 8 à 13, **caractérisée en ce que**, aux éléments de support (6, 8) correspondent des moyens à ressorts agissant entre ceux-ci et la broche filetée (42), afin de minimiser le jeu dans le filetage de la broche filetée (42).

15. Disposition de buses de mesure selon la revendication 2, **caractérisée en ce que** les éléments de support (6, 8) comprennent, des deux côtés du plan de référence (16), des surfaces d'appui lisses (64, 66) qui comprennent ensemble une disposition d'appui en forme V symétrique par rapport au plan de référence pour le prisme de soutien (62), dans lequel le prisme de soutien (62) comprend des surfaces d'appui lisses (68, 70) présentant des formes complémentaires, au moins à certains endroits, à la disposition d'appui, qui interagissent avec les surfaces d'appui lisses (64, 66) des éléments de support (6, 8) de façon à ce que le prisme de soutien (62) puise être réglé en hauteur ou soit réglé en hauteur par rapport au corps de base (4) lors d'un réglage des éléments de support (6, 8).

16. Disposition de buses de mesure selon la revendication 15, **caractérisée par** des moyens à ressorts pour la précontrainte des surfaces d'appui lisses (64, 68 et 66, 70) l'une contre l'autre.

17. Dispositif de mesure pneumatique pour la mesure de pièces de type arbres, **caractérisé en ce qu'**il comprend au moins une disposition de buses de mesure (2) selon l'une des revendications précédentes.
